# FASCICULE DE BREVET EUROPEEN

(11) **EP 1 535 126 B1**
(45) Date de publication et mention de la délivrance du brevet: **05.06.2013**
(21) Numéro de dépôt: 03755642.0
(22) Date de dépôt: 28.07.2003
(51) Int. Cl.: G06F 11/20, H04L 29/08

(54) **PROCEDE DE MIGRATION D'UNE APPLICATION LOGICIELLE DANS UNE ARCHITECTURE MULTI-ORDINATEURS, PROCEDE ET SYSTEME MULTI-ORDINATEURS POUR REALISER UNE CONTINUITE DE FONCTIONNEMENT METTANT EN OEUVRE CE PROCEDE DE MIGRATION**
VERFAHREN ZUR MIGRATION EINER SOFTWAREANWENDUNG IN EINER MEHRCOMPUTERARCHITEKTUR, VERFAHREN UND MEHRCOMPUTERSYSTEM ZUR REALISIERUNG EINER KONTINUIERLICHEN SOFTWAREANWENDUNG
MIGRATION METHOD FOR SOFTWARE APPLICATION IN A MULTI-COMPUTING ARCHITECTURE, METHOD FOR CARRYING OUT FUNCTIONAL CONTINUITY IMPLEMENTING SAID MIGRATION METHOD AND MULTI-COMPUTING SYSTEM PROVIDED THEREWITH

(30) Priorité: 02.08.2002 FR 0209856
(43) Date de publication de la demande: 01.06.2005
(73) Titulaire: SAP AG, 69190 Walldorf (DE)
(72) Inventeur: VERTES, Marc, F-31830 Plaisance du Touch (FR); DUFOUR, Laurent, F-31830 plaisance du Touch (FR)
(74) Mandataire: Müller-Boré & Partner Patentanwälte
(86) Numéro de dépôt international: PCT/FR2003/002372
(87) Numéro de publication internationale: WO 2004/015513

(56) Documents cités:
- EP-A- 1 096 751
- US-A- 5 917 997
- US-B1- 6 182 139
- US-B1- 6 366 558
- FAN C ET AL: "Experiences with a protocol stack for multimedia transport" NETWORKS, 1995. THEME: ELECTROTECHNOLOGY 2000: COMMUNICATIONS AND NETWORKS. YIN CONJUNCTION WITH THE IINTERNATIONAL CONFERENCE ON INFORMATION ENGINEERING., PROCEEDINGS OF IEEE SINGAPORE INTERNATIONAL CONFERENCE ON SINGAPORE 3-7 JULY 1995, NEW YORK, N, 3 juillet 1995 (1995-07-03), pages 617-621, XP010196162 ISBN: 0-7803-2579-6
- MAC UNIX MAN PAGES PRIMITIVES SETSOCKOPT AND GETSOCKOPT, [en ligne] XP002243640 Extrait de l'Internet: <URL:http://www.hmug.org/man/2/getsockopt. html> [extrait le 2003-06-11]
- "White Paper : Network Load Balancing Technical Overview" MICROSOFT WINDOWS 2000 SERVER, [en ligne] mars 2000 (2000-03), XP002243641 Redmond, USA Extrait de l'Internet: <URL:http://www.microsoft.com/windows2000/ docs/NLBtech2.doc> [extrait le 2003-06-06]
- SULTAN F.; SRINIVASAN K.; IYER D.; IFTODE L.: "Migratory tcp: connection migration for service continuity in the internet", PROCEEDINGS OF THE 22ND INTERNATIONAL CONFERENCE ON DISTRIBUTED COMPUTING SYSTEMS (ICDCS'02), vol. 22, 2 July 2002 (2002-07-02), pages 424-425,

## Description

La présente invention concerne un procédé pour réaliser la migration de connexions dans une architecture multi-ordinateurs. Elle vise également un procédé pour réaliser une continuité de fonctionnement d'une application logicielle dans une architecture multi-ordinateurs (cluster), mettant en oeuvre ce procédé de migration, ainsi qu'un système multi-ordinateurs implémentant ce procédé de continuité de fonctionnement.

Le domaine de l'invention est celui des clusters d'ordinateurs formés de plusieurs ordinateurs collaborant entre eux. Ces clusters sont par exemple utilisés pour exécuter des applications logicielles. Ainsi, à un instant donné, une application est exécutée sur l'un des ordinateurs du cluster, appelé noeud primaire ou opérationnel (OP), tandis que les autres ordinateurs du cluster sont appelés noeuds secondaires ou « stand-by » (SB), dans un contexte d'architecture redondante.

Or, l'exploitation de tels clusters montre que se posent des problèmes de fiabilité qui peuvent être dus à des défaillances du matériel ou du système d'exploitation, à des erreurs humaines, ou à la défaillance des applications elles-mêmes.

Pour résoudre ces problèmes de fiabilité, il existe actuellement des mécanismes, dits de haute disponibilité, qui sont mis en oeuvre sur la plupart des clusters actuels et qui sont basés sur un redémarrage automatique à froid de l'application sur un noeud de secours parmi l'un des noeuds secondaires du cluster.

Or ces mécanismes basés sur un redémarrage automatique ne permettent pas d'assurer une continuité totale du service fourni par l'application en cours d'exécution au moment de la défaillance.

Se pose en particulier le problème complexe de la migration des connexions de réseau qui doit être résolu au moment du basculement de service entre deux ordinateurs d'un cluster. Des solutions connues de basculement de service sont décrites dans US 5 917 997 et "Migratory tcp: connection migration for service continuity in the internet" PROCEEDINGS OF THE 22ND INTERNATIONAL CONFERENCE ON DISTRIBUTED COMPUTING SYSTEMS (ICDCS'02), vol. 22, 2 Juillet 2002 (2002-07-02), pages 424-425, de Sultan F., Srinivasan K., Iyer D, Iftode L.

Un premier objectif de la présente invention est d'apporter une solution à ce problème en proposant un procédé pour réaliser une migration de connexions dans une architecture multi-ordinateurs (cluster), depuis un premier noeud, appelé noeud primaire, comprenant un premier ordinateur dudit cluster sur lequel une application logicielle initiale est exécutée, vers au moins un noeud secondaire comprenant un autre ordinateur dudit cluster.

Ce premier objectif est atteint avec un tel procédé de migration mettant en oeuvre une adresse réseau virtuelle qui est portée par le premier ordinateur et qui est transférée sur l'autre ordinateur, ladite adresse réseau virtuelle étant prévue comme lien de dialogue entre le cluster et des ordinateurs clients connectés audit cluster et concernés par l'application logicielle.

Dans un mode de réalisation avantageux, Les messages en provenance d'un client sont capturés avant la prise en compte par la couche réseau du cluster. En particulier, lorsque ce procédé de migration est mis en oeuvre dans le contexte d'un protocole TCP/IP, la capture des messages est effectuée au niveau des tables « IP ».

La migration de connexions peut être aussi appliquée, au delà de la tolérance aux pannes, à la mobilité des réseaux: re-connexion d'un ordinateur portable ou autre appareil communiquant mobile d'un réseau physique à un autre, sans perte des connexions et contextes applicatifs, alors que les solutions existantes mettent en oeuvre un serveur intermédiaire non nécessaire avec le procédé de migrations selon l'invention.

Par rapport aux travaux de recherche antérieurs sur la migration des connexions, le procédé décrit selon l'invention présente les avantages suivants :
- il ne nécessite pas de modification du protocole de transport TCP, malgré les limitations que présente celui-ci,
- par voie de conséquence, les machines distantes ne sont impactées en aucune manière lors de la mise en oeuvre du procédé,
- l'implémentation de la migration de connexions ne nécessite pas de modification du système d'exploitation, mais simplement le chargement d'un module noyau dynamique indépendant.

Les protocoles de transport basés sur la couche « socket IP-UDP » sont aussi automatiquement pris en compte, quelles que soient leurs caractéristiques (exemple: protocoles de streaming audio ou video).

Il est important de noter que le procédé de migration de connexions selon l'invention peut prendre en compte une pluralité de noeuds secondaires ou « stand-by », procurant ainsi un effet multi-échelle (« scalabilité »).

Le procédé de migration selon l'invention peut être avantageusement mais non limitativement mis en oeuvre pour la migration de connexions qui sont associés à une application logicielle destinée à être répliquée sur un autre ordinateur de façon à permettre un basculement de service de l'application initiale vers sa réplique.

Le procédé de migration de connexions selon l'invention peut aussi être mis en oeuvre de façon complètement autonome, indépendamment de situations de basculement d'une machine à une autre ou de réplication d'applications logicielles.

On peut ainsi prévoir d'appliquer le procédé de migration selon l'invention pour une optimisation automatique de ressources informatiques par partage de charge par répartition dynamique de processus. Ce procédé de migration peut aussi être appliqué pour une maintenance non interruptive par relocation à la demande de processus au travers d'un réseau de ressources informatiques, ou pour une préservation de contexte applicatif dans des applications mobiles.

Un autre but de la présente invention est de proposer un procédé pour réaliser une continuité de fonctionnement d'une application logicielle dans une architecture multi-ordinateurs (cluster), cette application étant exécutée à un instant donné sur l'un des ordinateurs du cluster, appelé noeud principal, les autres ordinateurs dudit cluster étant appelés noeuds secondaires, ce procédé mettant en oeuvre le procédé de migration de connexions selon l'invention.

Cet autre objectif est atteint avec un procédé comprenant les étapes suivantes :
- maintien au fil de l'eau d'au moins un clone de l'application sur au moins un des noeuds secondaires,
- en cas de détection d'une défaillance ou d'un événement affectant ledit noeud principal, basculement de service vers l'un au moins desdits clones, et
- migration de connexions réseau.

Ainsi, avec le procédé de migration selon l'invention, il est désormais possible, grâce à la migration des connexions réseau, de rendre les basculements de service vers des clones, transparents pour le monde extérieur communiquant avec l'application.

Par ailleurs, le mécanisme de migration de connexions mis en oeuvre dans le procédé de migration selon l'invention n'implique pas une modification du code source de l'application et est donc non intrusif dans l'application, à la différence des procédés de migration de l'art antérieur.

Les clones mis en oeuvre dans le procédé de continuité de fonctionnement selon l'invention sont dits « chauds », c'est-à-dire qu'ils sont la réplique exacte de l'application et de tout son contexte opératoire. Ils sont mis à jour régulièrement (périodiquement ou sur évènements caractéristiques). Ces clones contiennent toutes les ressources et informations requises par l'application pour fournir son service.

Le procédé de continuité de fonctionnement selon l'invention permet en outre de superviser l'état de toutes les ressources nécessaires au bon fonctionnement de l'application. Quand la dégradation rédhibitoire de l'une d'entre elles est détectée, le procédé de continuité de fonctionnement selon l'invention prévoit une élection d'un clone comme nouveau primaire et lui ordonne de prendre la main.

Cette élection est appelée basculement et est transparente pour le reste du monde qui communique avec l'application : bien que le noeud primaire soit mis hors service, le service fourni par l'application n'est pas interrompu car il est repris avec tout son contexte par le clone élu.

On peut ainsi garantir que tout message transmis par le reste du monde à l'application sera traité, soit par le primaire (pré-basculement), soit par le clone (post-basculement). Pour ce faire, le procédé de continuité de fonctionnement selon l'invention peut en outre comporter un enregistrement sur chaque clone (en plus du mécanisme de clonage périodique), de tous les messages reçus par le primaire depuis la dernière mis à jour des clones. Ces messages seront réinjectés dans le clone élu nouveau primaire en cas de basculement.

La réplication holistique, pour être complète, inclut la réplication de ressources « noyau », comme par exemple l'état des piles protocolaires mis en oeuvre pour gérer la connectivité de l'application à protéger avec le monde extérieur (ses « clients »).

Un avantage important procuré par le procédé de migration selon l'invention est de rendre transparent pour les clients de l'application le basculement du service applicatif du primaire vers un secondaire. Techniquement, cela veut dire que les connexions établies par les clients avec l'application lors de son fonctionnement sur le primaire, doivent être transmises (migrées) vers les clones et ne doivent pas être rompues lors d'un basculement. Cette exigence est non triviale car pour les applications concernées par le procédé de continuité de fonctionnement selon l'invention, le monde extérieur (les clients) communique avec l'application essentiellement via des connexions TCP/IP, un protocole point à point « attaché » aux machines physiques sur lesquels résident applications et clients.

Le procédé de continuité de fonctionnement selon l'invention résout ce problème en implémentant un mécanisme de réplication de l'état de la pile protocolaire ainsi que d'un système d'enregistrement / re-jeu qui permet, suite à un basculement, de réinjecter les messages reçus par le noeud primaire avant le basculement mais pas encore pris en compte par le clone.

L'état de la pile, dans le noyau du système d'exploitation, est périodiquement introspecté (analysé et capturé) sur la machine primaire, cet état étant transféré avec le point de reprise (checkpoint) holistique et restauré sur les noeuds secondaires.

En parallèle, tous les messages reçus par le noeud maître sont interceptés au plus bas niveau (avant d'être livrés à l'application sur le noeud primaire) et transférés pour être enregistrés sur les noeuds secondaires. Sur les noeuds secondaires, ces messages sont sauvegardés depuis le dernier point de reprise reçu.

En cas de basculement, le noeud secondaire élu prend la main en faisant tourner l'application à partir de son dernier point de reprise (ce point de reprise est légèrement dans le passé par rapport à l'application lors du basculement, puisque reçu périodiquement par les noeuds secondaires).

Pour ramener ce clone dans l'état présent, c'est à dire dans l'état de l'application au moment du basculement, les messages enregistrés sont réinjectés. En les rejouant, le clone nouveau primaire atteint alors l'état de l'application au moment du basculement. Ce re-jeu, dans certains cas, peut se faire de façon accélérée (compression du temps, élimination des « blancs »). Pendant ce re-jeu, les communications avec le monde extérieur sont fermées. Si de nouveaux messages sont reçus des clients pendant le re-jeu, ils sont refusés, mais sans déconnexion. Ce refus sera géré par le protocole (contrôle de flux) et sera vu par les clients comme un ralentissement du réseau ou du service.

Il faut noter que le re-jeu nécessite l'adjonction spécifique d'un canal d'injection de messages dans la file de réception du driver de l'interface réseau indépendamment du niveau physique, le système d'émission de trames ne permettant pas le rebouclage (entrées-sorties half duplex) sur les interfaces physiques.

A l'issue du re-jeu, le clone est dans l'état exact de l'application avant le basculement et reprend la main en ré-ouvrant les communications avec le monde extérieur.

Il est à noter que dans certaines configurations et selon le but recherché, il est possible de mettre en oeuvre la politique de basculement à chaud sur un clone, sans mettre en oeuvre le re-jeu. Les impacts d'un tel scénario de reprise sont :
- la rupture des connexions en cours, donc, pour les clients connectés sur des sessions actives, niveau de protection inférieur à celui proposé par le re-jeu,
- la reprise à chaud (contexte applicatif préservé) immédiate (pas de temps de re-jeu pendant lequel les nouveaux messages sont temporisés), donc, ré-établissement plus rapide du service nominal avec acceptation plus rapide de nouveaux clients.

L'implémentation de l'une ou l'autre des ces politiques de reprise est un paramètre adaptable.

Il est à noter que pour la mise en oeuvre du procédé de migration selon l'invention, on peut avantageusement utiliser des techniques d'ingénierie logicielle non intrusive dynamique, qui ont fait l'objet d'une demande de brevet publiée le 2 août 2002 sous le numéro FR2820221. Ces techniques d'ingénierie logicielle permettent de manipuler des applications dans leur représentation binaire (exécutable), de façon à rendre le procédé de réalisation de continuité de fonctionnement selon l'invention transparent pour l'application et donc générique.

Suivant un autre aspect de l'invention, il est proposé un système multi-ordinateurs prévu pour exécuter sur au moins desdits ordinateurs au moins une application logicielle, implémentant le procédé pour réaliser une continuité de fonctionnement selon l'invention.

D'autres avantages et caractéristiques de l'invention apparaîtront à l'examen de la description détaillée d'un mode de mise en oeuvre nullement limitatif, et des dessins annexés sur lesquels :
- la figure 1 illustre schématiquement un exemple de mise en oeuvre du procédé de migration selon l'invention au sein d'un procédé de continuité de fonctionnement;
- la figure 2 illustre schématiquement un mécanisme de point de reprise (checkpointing) mis en oeuvre dans un procédé de continuité de fonctionnement selon l'invention ; et
- la figure 3 illustre schématiquement des fonctions de supervision et de surveillance assurées sur les noeuds d'un système multi-ordinateurs (cluster) selon l'invention.

On va maintenant décrire, en référence aux figures précitées le fonctionnement du mécanisme de migration des connexions réseau mis en oeuvre dans le procédé de migration selon l'invention.

La migration des connexions s'appuie sur l'utilisation d'une adresse réseau virtuelle dite adresse virtuelle du cluster. Cette adresse est portée par la machine qui détient l'application opérationnelle. Elle est transférée vers une machine SB lors du basculement (switch). Les clients doivent s'adresser à l'application clusterisée en dialoguant sur cette adresse virtuelle.

La capture des messages se fait avant la prise en compte par la couche réseau. Sur TCP/IP, cette capture est faite au niveau des "IP Tables" se qui assure la portabilité.

Les messages reçus sur l'adresse IP virtuelle assignée au cluster sont émis vers le ou les machines SB sur un canal de type multicast (diffusion simultanée en direction de plusieurs destinataires) fiable qui s'assure de la transmission des paquets. Lorsque le message est reçu sur toutes les machines SB, celui ci est transmis à la couche réseau du noeud opérationnel OP. Sinon le message est supprimé (la couche transport du distant assurant la retransmission).

Ce mécanisme permet de garantir qu'un message peut être rejoué sur une machine SB lorsqu'il est pris en compte sur le noeud opérationnel OP. Le filtrage "IP Tables" permet de ne s'intéresser qu'au message concernant l'adresse virtuelle du cluster.

Lors d'une copie (dump), une marque de copie (dump) est émise vers les machines SB afin de dater la copie dans le journal (log). Ainsi on sait à partir de quel paquet il faut commencer le re-jeu lors d'un basculement (switch).

Le module "IP tables" est un module noyau indépendant de la couche TCP/IP qui est chargé dynamiquement. Aucune modification de la pile TCP/IP n'est requise ni sur le cluster ni sur les machines distantes.

Les appels systèmes génériques *getsockopt* et *setsockopt* sont étendus, via un pilote (driver), pour capturer/modifier les paramètres *socket* suivants:
- ports local & distant
- numéro de référence local & distant
- numéro du prochain paquet à émettre & attendu
- horloge (« timer ») d'émission & de réception
- taille de fenêtre (« window size »)
etc.

La sauvegarde de l'état de la « socket » prend également en compte la liste des paquets en attente d'émission (send queue), ceux qui sont en transit (émis mais non acquittés), et les paquets reçus mais pas encore lus par l'application (file de réception : « receive queue »).

La sauvegarde est faite dans le contexte du processus au moment du dump, après l'émission de la marque de log. Ce mécanisme assure que tous les paquets seront rejoués. Si un paquet est reçu entre l'émission de la marque de log et la capture de l'état de la « socket », celui-ci est automatiquement ignoré par la couche transport lors du basculement (switch). Ce traitement est un fondement de la couche transport.

L'extension des appels système *getsockopt* et *setsockopt* est faite par un module noyau chargé dynamiquement qui ne requiert aucune modification du code source du noyau.

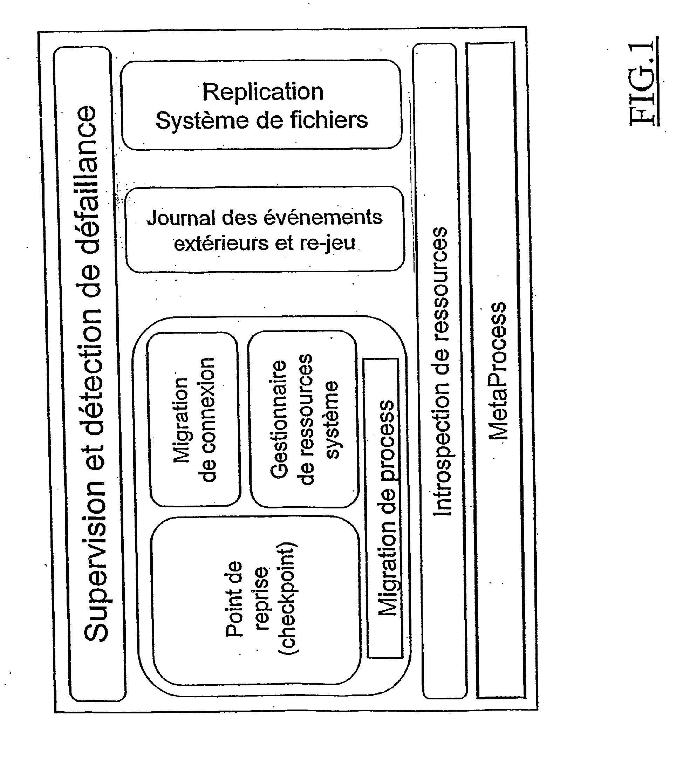

Le procédé de migration de connexions selon l'invention peut être directement intégré au sein d'un procédé de continuité de fonctionnement pour un cluster de machines, en référence à la figure 1. Un tel système met en oeuvre une supervision et une détection de défaillance, un mécanisme de migration de process incluant un mécanisme de point de reprise (checkpoint), un mécanisme de migration de connexions selon l'invention, et un gestionnaire de ressources système. Ce procédé de continuité de fonctionnement inclut aussi une fonction d'introspection de ressources, un mécanisme de réplication du système de fichiers, un mécanisme d'édition et de mise à jour d'un journal des événements, et un mécanisme de re-jeu.

On va maintenant décrire le mécanisme de commutation mis en oeuvre dans une migration des connexions réseau au sein du procédé de migration selon l'invention.

Lorsqu'une machine SB devient un noeud opérationnel OP, l'adresse IP virtuelle est créé sur le nouveau noeud opérationnel OP mais les règles de filtrage interdisent toute arrivée de message de l'extérieur pendant la phase de jeu. Une fois le jeu terminé, les règles de filtrage sont modifiées afin de dispatcher les messages sur les machines SB.

Si des messages sont émis par le site distant, ils seront détruits à l'arrivée dans la machine nouvellement OP, et seront retransmis par la couche distante sur « timeout » (hors temps). Ce mécanisme est un des fondements de la couche transport.

La recréation des « sockets » (couche de communication) se fait en 2 phases:
- avant re-jeu vers un « loopback » (dispositif de stockage virtuel),
- après re-jeu en les reconnectant vers l'extérieur.

Avant le re-jeu, les « sockets » sont connectés à un « loopback » qui permet la réinjection des paquets enregistrés depuis la dernière restauration.

Les paramètres de la « socket » sauvegardés lors de la précédente copie « dump » sont remis en place via l'appel étendu *setsockopt.*

Les paquets enregistrés depuis la dernière restauration sont émis vers la couche transport comme s'il avait été reçus directement d'un équipement distant (clients). Les messages transmis par la couche transport sont automatiquement détruits afin de ne pas perturber le distant.

A la fin du re-jeu, l'état de la « socket » correspond à celui sur le noeud opérationnel OP avant le basculement (switch). Il est alors possible de reprendre le dialogue avec le distant. Cette reprise se fait en modifiant les paramètres « sockets » concernant l'adresse du distant, et en modifiant les règles de filtrage pour autoriser l'entrée et la sortie de message sur l'adresse virtuelle du cluster. Le dialogue reprend alors normalement.

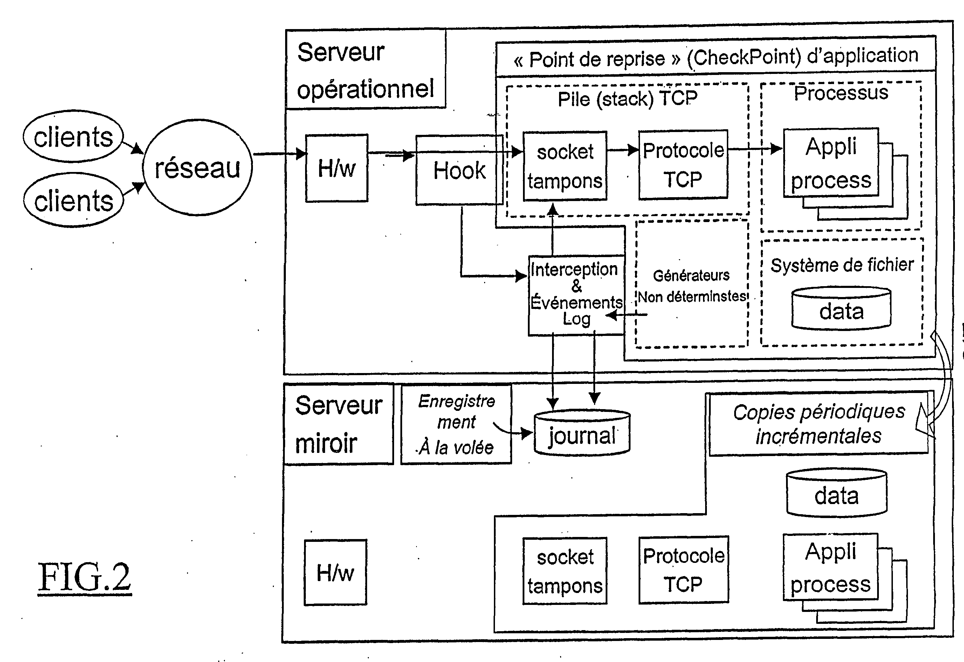

Le procédé de migration de connexions selon l'invention peut être mis en oeuvre dans le cadre d'une interaction entre un serveur opérationnel et un serveur miroir tel qu'illustré par la figure 2, dans lequel un mécanisme de point de reprise (checkpoint) est activé, avec génération de copies périodiques incrémentales.

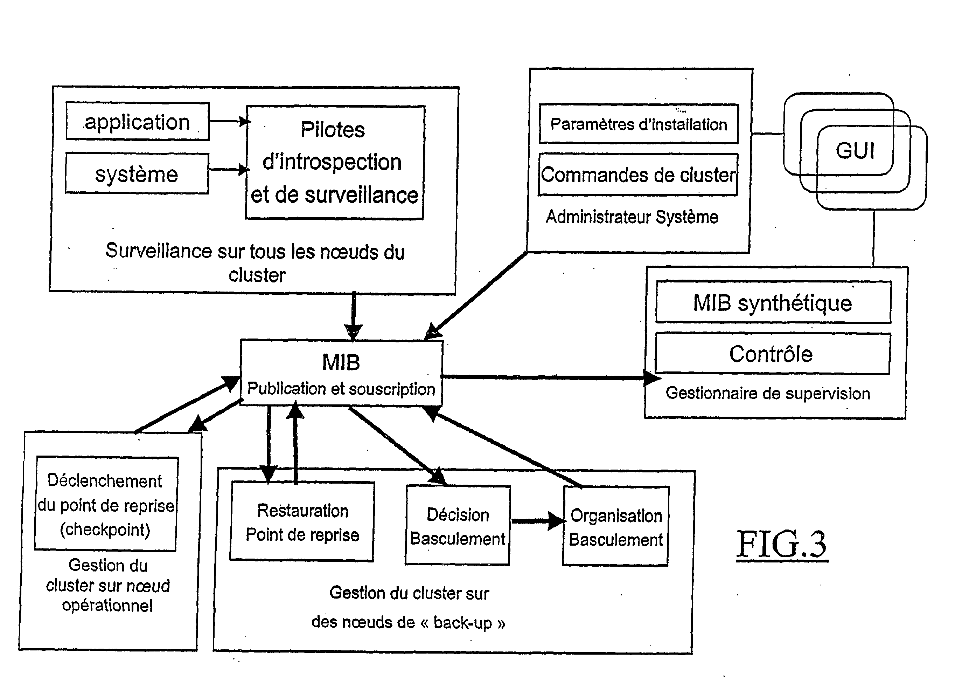

Pour la mise en oeuvre d'un procédé de continuité de fonctionnement selon l'invention, entre un noeud opérationnel d'un cluster et un ou plusieurs noeuds secondaires de ce cluster, une base MIB (Management Information Base) est accédée par des pilotes d'introspection et de surveillance et par des commandes du cluster, en référence à la figure 3. Cette base MIB intervient dans la gestion du cluster sur le noeud opérationnel et sur des noeuds de « back-up » pour les fonctions de restauration et de point de reprise, de décision de basculement et d'organisation de ce basculement. Un gestionnaire de supervision alimenté par la base MIN assure des fonctions de contrôle et de MIB synthétique, en relation avec une interface utilisateur graphique GUI.

Bien sûr, l'invention n'est pas limitée aux exemples qui viennent d'être décrits et de nombreux aménagements peuvent être apportés à ces exemples sans sortir du cadre de l'invention.

## Revendications

1. "Procédé pour réaliser une migration de connexions associées à une application logicielle dans une architecture multi-ordinateurs, depuis un premier ordinateur dudit cluster sur lequel ladite application est exécutée, vers au moins un second ordinateur dudit cluster, le procédé comprenant:
- la mise en oeuvre d'une adresse réseau virtuelle qui est portée par ledit premier ordinateur et qui est utilisée par des ordinateurs clients pour établir des connexions pour accéder à ladite application;
- une étape périodique de sauvegarde par ledit premier ordinateur du contexte d'exécution de l'application sur ledit au moins un deuxième ordinateur;
- la transmission en multicast de chaque message de connexion reçu sur l'adresse réseau virtuelle vers ledit au moins un second ordinateur, et en réponse à la réception du message par lesdits deuxièmes ordinateurs, la transmission desdits messages vers ledit premier ordinateur, les messages étant enregistrés sur ledit au moins un second ordinateur depuis la dernière sauvegarde du contexte de l'application;
le procédé comprenant en outre sur décision de basculement du service fourni par l'application
- une étape d'exécution de l'application sur un deuxième ordinateur élu parmi ledit au moins un second ordinateur à partir de la dernière sauvegarde du contexte de l'application du service,
- une étape de re-jeu des messages enregistrés à partir de la dernière sauvegarde du contexte de l'application sur ledit deuxième ordinateur élu, et
- le transfert sur ledit deuxième ordinateur élu de ladite adresse réseau virtuelle".

2. Procédé de migration selon la revendication 1, **caractérisé en ce que** les messages en provenance des clients reçus sur l'adresse réseau virtuelle sont capturés avant la prise en compte des messages sur le premier ordinateur.

3. Procédé de migration selon la revendication 2, mis en oeuvre dans le contexte d'un protocole TCP/IP, **caractérisé en ce que** la capture des messages est effectuée au niveau des tables « IP ».

4. Procédé de migration selon la revendication 3, **caractérisé en ce qu'**il comprend une capture et une modification des paramètres « socket », via des appels systèmes génériques étendus.

5. Procédé de migration selon la revendication 4, **caractérisé en ce que** les paramètres « socket » capturés et modifiés incluent au moins l'un des paramètres suivants :
- ports local et distant
- numéro de référence local et distant
- numéro du prochain paquet à émettre et attendu
- horloge « timer » d'émission et de réception
- taille de fenêtre.

6. Procédé de migration selon la revendication 5, **caractérisé en ce qu'**il comprend en outre une sauvegarde de la liste des paquets en attente d'émission, des paquets qui sont en transit et des paquets reçus mais non encore lus par l'application.

7. Procédé de migration selon l'une des revendications précédentes où l'étape de sauvegarde du contexte d'exécution du service comprend l'état de la pile dans le noyau du système d'exploitation qui est restauré sur ledit au mois un deuxième ordinateur.

8. Procédé de migration selon l'une des revendications précédentes où le re-jeu des messages se fait sur un canal spécifique d'injection de message dans la file de réception du driver de l'interface réseau dudit au moins un deuxième ordinateur.

9. Procédé de migration selon l'une des revendications précédentes, **caractérisé en ce que** la sauvegarde sur ledit au moins un deuxième ordinateur est déclenchée sur un ou plusieurs événements caractéristiques.

10. Procédé de migration selon l'une des revendications précédentes, **caractérisé en ce qu'**il comprend en outre une supervision de l'état de ressources nécessairement au fonctionnement de l'application.

11. Procédé de migration selon l'une des revendications précédentes, **caractérisé en ce qu'**il comprend en outre, à la suite d'une détection d'une défaillance ou d'un événement affectant ledit premier ordinateur, une étape pour élire un deuxième ordinateur parmi ledit au moins un deuxième ordinateur pour la migration, ledit ordinateur élu devenant le nouveau premier ordinateur.

12. Système multi-ordinateurs prévu pour fournir sur au moins desdits ordinateurs au moins un service, ce système mettant en oeuvre le procédé pour réaliser une migration de connexions selon l'une quelconque des revendications 1 à 11.

## Patentansprüche

1. Verfahren zur Ausführung einer Migration von einer Softwareanwendung zugeordneten Verbindungen in einer Rechnerverbundarchitektur, ausgehend von einem ersten Rechner des genannten Clusters, auf dem die genannte Anwendung ausgeführt wird, und hin zu mindestens einem zweiten Rechner des genannten Clusters, wobei das Verfahren Folgendes umfasst:
- den Einsatz einer virtuellen Netzadresse, die vom genannten ersten Rechner getragen wird, und die von den Client-Rechnern zur Herstellung von Verbindungen verwendet wird, um einen Zugriff auf die bzw. Zugang zur Anwendung zu erhalten;
- einen periodischen Sicherungs-Schritt durch den genannten ersten Rechner des Ausführungs-Kontextes der Anwendung auf den genannten zumindest einen zweiten Rechner;
- die Multicast-Übertragung jeder Verbindungsmeldung, die an der virtuellen Netzadresse erhalten wird, zum genannten zumindest einen zweiten Rechner, und, als Antwort auf den Empfang der Meldung durch die genannten zweiten Rechner, die Übertragung der genannten Meldungen hin zum genannten ersten Rechner, wobei die Meldungen auf dem genannten zumindest einen zweiten Rechner ab der letzten Sicherung des Ausführungs-Kontextes der Anwendung aufgezeichnet werden;
wobei das Verfahren auf Beschluss der Umschaltung *(basculement)* des von der Anwendung bereitgestellten Dienstes des Weiteren Folgendes umfasst
- einen Schritt zur Ausführung der Anwendung auf einem zweiten Rechner, der unter den genannten zumindest einen zweiten Rechner ausgewählt wird, ab der letzten Sicherung des Ausführungs-Kontextes der Anwendung,
- einen *Replay*-Schritt der aufgezeichneten Meldungen ab der letzten Sicherung des Ausführungs-Kontextes der Anwendung auf dem genannten gewählten zweiten Rechner, und
- die Verlagerung auf den genannten gewählten zweiten Rechner der genannten virtuellen Netzadresse.

2. Verfahren zur Migration nach Anspruch 1, **dadurch gekennzeichnet, dass** die von den Clients stammenden Meldungen, die an der virtuellen Netzadresse empfangen werden, vor einer Berücksichtigung der Meldungen auf dem ersten Rechner erfasst werden.

3. Verfahren zur Migration nach Anspruch 2, das im Kontext eines TCP/IP-Protokolls umgesetzt wird, **dadurch gekennzeichnet, dass** die Erfassung der Meldungen auf der Ebene der *IP*-Tabellen durchgeführt wird.

4. Verfahren zur Migration nach Anspruch 3, **dadurch gekennzeichnet, dass** es eine Erfassung und eine Modifikation der *Socket*-Parameter mittels ausgeweiteter generischer Systemaufrufe umfasst.

5. Verfahren zur Migration nach Anspruch 4, **dadurch gekennzeichnet, dass** die erfassten und modifizierten Socket-Parameter mindestens einen der folgenden Parameter beinhalten:
- lokale und entfernte Ports
- lokale und entfernte Referenznummer
- Nummer des nächsten Pakets, das gesendet werden soll oder erwartet wird
- *timer*-Uhr für Sendung und Empfang
- Fenstergröße.

6. Verfahren zur Migration nach Anspruch 5, **dadurch gekennzeichnet, dass** es des Weiteren eine Sicherung der Liste von Paketen umfasst, die in Erwartung einer Sendung stehen, von Paketen, die durchgeleitet werden, und von Paketen, die von der Anwendung empfangen aber noch nicht gelesen worden sind.

7. Verfahren zur Migration nach einem der vorhergehenden Ansprüche, wobei der Sicherungs-Schritt des Dienst-Ausführungs-Kontextes den Zustand des Stacks im Kern des Betriebssystems umfasst, der auf dem genannten zumindest einen zweiten Rechner wiederhergestellt wird.

8. Verfahren zur Migration nach einem der vorhergehenden Ansprüche, wobei das *Replay* der Meldungen auf einem spezifischen Kanal zur Meldungseinspeisung in die Empfangswarteschlange *(file de reception)* des *Drivers* der Netzwerkschnittstelle des genannten zumindest einen zweiten Rechner durchgeführt wird.

9. Verfahren zur Migration nach einem der vorhergehenden Ansprüche,
**dadurch gekennzeichnet, dass** die Sicherung auf dem genannten zumindest einen zweiten Rechner auf (sur) einem oder mehreren charakteristischen Ereignissen ausgelöst wird.

10. Verfahren zur Migration nach einem der vorhergehenden Ansprüche,
**dadurch gekennzeichnet, dass** es des Weiteren eine Überwachung des Zustands der zum Betrieb der Anwendung notwendigen Ressourcen umfasst.

11. Verfahren zur Migration nach einem der vorhergehenden Ansprüche,
**dadurch gekennzeichnet, dass** es des Weiteren, infolge der Feststellung eines Störungsfalls oder eines den ersten Rechner belastenden Ereignisses, einen Schritt umfasst, um einen zweiten Rechner unter den genannten mindestens einen zweiten Rechner zur Migration auszuwählen, wobei der genannte ausgewählte zweite Rechner der neue erste Rechner wird.

12. Rechnerverbundsystem, der vorgesehen wird, um auf mindestens einem der genannten Rechner mindestens einen Dienst bereitzustellen, wobei dieses System das Verfahren zur Realisation einer Migration von Verbindungen, nach irgendeinem der Ansprüche von 1 bis 11 umsetzt.

## Claims

1. "A method for implementing a migration of connections associated with a software application in a multi-computing architecture, from a first computer of said cluster on which said application is executed to at least a second computer of said cluster, the method comprising:
- implementing a virtual network address, which is connected to said first computer and is utilised by client computers for establishing connections to access said application;
- a regular backup stage by said first computer within the context of executing the application on said at least one second computer;
- the multicast transmission of each connection message received at the virtual network address to said at least one second computer, and, in response to the receipt of the message by said second computers, the transmission of said messages to said first computer, the messages being registered on said at least one second computer as from the last backup within the context of the application;
The method furthermore comprising, on decision of migration of the service provided by the application
- a stage of implementing the application on a second computer chosen from among said at least one second computer as from the last backup within the context of the application of the service;
- a stage of reviewing the messages registered as from the last backup within the context of the application on said second computer chosen, and
- the transfer to said second computer chosen from said virtual network address".

2. The migration method according to claim 1, **characterised in that** the messages coming from clients received at the virtual network address are captured prior to receiving messages on the first computer.

3. The migration method according to claim 2, implemented within the context of a TCP/IP protocol, **characterised in that** the messages are captured at the level of the "IP" tables.

4. The migration method according to claim 3, **characterised in that** it comprises a capture and a modification of the "socket" parameters, via the extended generic system calls.

5. The migration method according to claim 4, **characterised in that** the "socket" parameters captured and modified include at least one of the following parameters:
- Local and remote ports
- Local and remote reference numbers
- Number of the next data packet to be transmitted and awaiting transmission
- A transmitting and receiving "timer" clock
- Window size.

6. The migration method according to claim 5, **characterised in that** it moreover comprises a backup of the list of packets awaiting transmission, packets which are travelling and packets received, but not yet read by the application.

7. The migration method according to one of the preceding claims, where the stage of backing up within the context of implementing the service comprises the battery charging status in the core zone of the operating system which is restored on said at least one second computer.

8. The migration method according to one of the preceding claims, where the review of the messages is carried out on a specific message injection channel in the delivery queue of the driver of the network interface of said at least one second computer.

9. The migration method according to one of the preceding claims, **characterised in that** the backup on said at least one second computer is activated on one or more characteristic events occuring.

10. The migration method according to one of the preceding claims, **characterised in that** it moreover comprises monitoring the status of resources necessary for the functioning of the application.

11. The migration method according to one of the preceding claims, **characterised in that** it moreover comprises, following the detection of a failure or an event affecting said first computer, a stage for choosing a second computer from among said at least one second computer for the migration, said computer chosen becoming the new first computer.

12. A multi-computing system provided for making available on at least said computer at least one service, with this system implementing the method for implementing a migration of connections according to any of claims 1 to 11.
